# EUROPÄISCHE PATENTANMELDUNG

(11) **EP 2 468 812 A1**
(43) Veröffentlichungstag der Anmeldung: **27.06.2012**
(21) Anmeldenummer: 10196323.9
(22) Anmeldetag: 21.12.2010
(51) Int. Cl.: C08K 3/04, C08K 5/00

(54) **Thermoplastische Formmasse**

(71) Anmelder: BASF SE, 67056 Ludwigshafen (DE)
(72) Erfinder: Gibon, Cécile, 68159, Mannheim (DE); Yang, Xin, 64625, Bensheim (DE); Kujat, Christof, 67434, Neustadt (DE); Weber, Martin, 67487, Maikammer (DE); Szarvas, Laszlo, 67071, Ludwigshafen (DE); Klein, Daniel, 68163, Mannheim (DE); Poetschke, Petra, 01309, Dresden (DE); Krause, Beate, 01662, Meißen (DE)
(74) Vertreter: Féaux de Lacroix, Stefan

(57) **Zusammenfassung**

Die thermoplastische Formmasse enthält, bezogen auf die thermoplastische Formmasse,
a) mindestens ein Polyamid, Copolyamid oder einen Polyamid enthaltenden Polymerblend als Komponente A,
b) 3 bis 20 Gew.-% Ruß, Graphit oder Gemische davon als Komponente B,
c) 0,1 bis 3 Gew.-% ionische Flüssigkeiten als Komponente C.

## Beschreibung

Die Erfindung betrifft eine thermoplastische Formmasse, die neben Polyamid und Ruß, Graphit oder Gemischen davon zusätzlich ionische Flüssigkeiten enthält.

Der Einsatz von Ruß oder Graphit in speziellen Kunststoffen in Kombination mit ionischen Flüssigkeiten ist an sich bekannt.

Die EP-A-2 223 904 betrifft ein Verfahren zur Herstellung von antistatisch ausgerüsteten Kunststeinen für Flächengebilde. Die Kunststeine enthalten neben großen Anteilen anorganischer Materialien bis maximal 40 Gew.-% einer Polymermatrix, die ein Polyurethan, Epoxidharz, Polyesterharz, Acrylat, Methacrylat und/oder Vinylester enthält. Als Zusatz zur Erhöhung der Leitfähigkeit können Graphit oder Ruß zugesetzt werden. Zudem enthalten die Formmassen ionische Flüssigkeiten.

Die EP-B-1 984 438 betrifft ein antistatisch ausgerüstetes Polyurethan, das neben Füllstoffen wie Ruß auch ionische Flüssigkeiten enthält.

Die WO 2008/006422 betrifft die Verwendung von ionischen Flüssigkeiten oder Lösungen aus Metallsalzen in ionischen Flüssigkeiten als Antistatika für Kunststoffe. Die Kunststoffe sind dabei insbesondere Polyurethane. Hinweise auf andere einsetzbare Kunststoffe sind nicht vorhanden.

Aufgabe der vorliegenden Erfindung ist die Bereitstellung von Ruß oder Graphit oder Gemische davon enthaltenden Polyamid-Formmassen, die eine verbesserte Leitfähigkeit aufweisen, oder in denen unter Erhalt der Leitfähigkeit der Gehalt an Ruß oder Graphit oder Gemischen davon vermindert werden kann.

Die Aufgabe wird erfindungsgemäß gelöst durch eine thermoplastische Formmasse, enthaltend, bezogen auf die thermoplastische Formmasse,
a) mindestens ein Polyamid, Copolyamid oder einen Polyamid enthaltenden Polymerblend als Komponente A,
b) 3 bis 20 Gew.-% Ruß, Graphit oder Gemische davon als Komponente B,
c) 0,1 bis 3 Gew.-% ionische Flüssigkeiten als Komponente C.

Es wurde erfindungsgemäß gefunden, dass eine Kombination geringer Mengen ionischer Flüssigkeiten mit Ruß, Graphit oder Gemischen davon zu einer Kombinationswirkung führt, die eine hohe Leitfähigkeit auch bei niedrigen Gehalten an Ruß, Graphit oder Gemischen davon bewirkt.

Der Anteil der ionischen Flüssigkeiten in der thermoplastischen Formmasse beträgt dabei vorzugsweise 0,1 bis 1,5 Gew.-%, insbesondere 0,3 bis 1,2 Gew.-%.

Der Anteil an Ruß, Graphit oder Gemischen davon als Komponente B beträgt vorzugsweise 3,5 bis 10 Gew.-%, besonders bevorzugt 4 bis 8 Gew.-%, bezogen auf die thermoplastische Formmasse.

### Ionische Flüssigkeit Komponente C

Die Erfindung ist nicht eingeschränkt auf spezielle ionische Flüssigkeiten als Komponente C; es können alle geeigneten ionischen Flüssigkeiten verwendet werden, worunter auch Gemische verschiedener ionischer Flüssigkeiten verstanden werden.

Ionische Flüssigkeiten sind nach der Definition von Wasserscheid und Keim in: Angewandte Chemie 2000, 112, 3926-3945 bei relativ niedrigen Temperaturen schmelzende Salze mit nicht molekularem, ionischem Charakter. Sie sind bereits bei relativ niedrigen Temperaturen flüssig und dabei relativ niedrig viskos. Sie besitzen sehr gute Löslichkeiten für eine große Anzahl organischer, anorganischer und polymerer Substanzen. Darüber hinaus sind sie in der Regel nicht brennbar, nicht korrosiv und haben keinen messbaren Dampfdruck.

Ionische Flüssigkeiten sind Verbindungen, die aus positiven und negativen Ionen gebildet werden, jedoch insgesamt ladungsneutral sind. Die positiven wie auch die negativen Ionen sind überwiegend einwertig, möglich sind jedoch auch multivalente Anionen und/oder Kationen, beispielsweise mit einer bis fünf, bevorzugt mit einer bis vier, weiter bevorzugt mit einer bis drei und ganz besonders bevorzugt mit einer bis zwei elektrischen Ladungen pro Ion. Die Ladungen können sich an verschiedenen lokalisierten oder delokalisierten Bereichen innerhalb eines Moleküls befinden, also betainartig, oder auch wie ein getrenntes Anion und Kation verteilt sein. Bevorzugt sind solche ionischen Flüssigkeiten, die aus mindestens einem Kation und mindestens einem Anion aufgebaut sind.

Ionische Flüssigkeiten haben ein komplexeres Lösungsverhalten im Vergleich zu traditionellen wässrigen und organischen Lösungsmitteln, da ionische Flüssigkeiten Salze sind und keine molekularen nichtionischen Lösungsmittel. Ionische Flüssigkeiten sind vorzugsweise in einem Temperaturbereich von -70 bis 300 °C in der flüssigen Phase vorliegend.

Bevorzugt sind ionische Flüssigkeiten mit möglichst niedrigem Schmelzpunkt, insbesondere unterhalb von 150 °C, weiter bevorzugt unterhalb von 100 °C, besonders bevorzugt unterhalb von 80 °C.

Die als Mittel zur Verbesserung der Leitfähigkeit fungierende ionische Flüssigkeit kann so ausgewählt werden, dass sie weitgehend chemisch inert gegenüber den an der Compoundierung teilnehmenden Stoffen ist.

Die ionischen Flüssigkeiten sind typischerweise aus einem organischen Kation aufgebaut, das häufig durch Alkylierung einer Verbindung erhalten wird, beispielsweise von Imidazolen, Pyrazolen, Thiazolen, Isothiazolen, Azathiazolen, Oxothiazolen, Oxazinen, Oxazolinen, Oxazaborolen, Dithiozolen, Triazolen, Selenozolen, Oxaphospholen, Pyrrolen, Borolen, Furanen, Thiophenen, Phospholen, Pentazolen, Indolen, Indolinen, Oxazolen, Isoxazolen, Isotriazolen, Tetrazolen, Benzofuranen, Dibenzofuranen, Benzothiophenen, Dibenzothiophenen, Thiadiazolen, Pyridinen, Pyrimidinen, Pyrazinen, Pyridazinen, Piperazinen, Piperidinen, Morpholonen, Pyranen, Anolinen, Phthalazinen, Quinazolinen, Quinoxalinen und Kombinationen davon.

Besonders bevorzugt ist in der ionischen Flüssigkeit das Kation der ionischen Flüssigkeit ausgewählt aus der Gruppe, enthaltend quaternäre Ammonium-Kationen, Phosphonium-Kationen, Imidazolium-Kationen H-Pyrazolium-Kationen, Pyridazinium-Ionen, Pyrimidinium-Ionen, Pyrazinium-Ionen, Pyrolidinium-Kationen, Guanidinium-Kationen, 5- bis mindestens 6-gliedrigen Kationen, die mindestens ein Phosphor- oder Schwefelatom enthalten, dem 1,8-Diazabicyclo[5.4.0]undec-7-enium-Kation und dem 1,8-Diazabicyclo[4.3.0]non-5-inium-Kation sowie Oligo- und Polymere, die diese Kationen enthalten.

Der anionische Teil der ionischen Flüssigkeit kann aus anorganischen oder organischen Anionen aufgebaut sein. Typische Beispiele hierfür sind Halogenide, BX₄⁻, PF₆⁻, AsF₆⁻, SbF₆⁻, NO₂⁻, NO₃⁻, SO₄²⁻, Alkylsulfate, BR₄⁻, substituierte oder unsubstituierte Carborane, substituierte oder unsubstituierte Metallocarborane, Phosphate, Phosphite, Polyoxomethalate, substituierte oder unsubstituierte Carboxylate, Triflate, Triflimide und nicht koordinierende Anionen. Dabei kann R Wasserstoff, Alkyl, substituiertes Alkyl, Cycloalkyl, substituiertes Cycloalkyl, Heteroalkyl, Heterocycloalkyl, substituiertes Heterocycloalkyl, Aryl, substituiertes Aryl, Heteroaryl, substituiertes Heteroaryl, Alkoxy-Aryloxy, Acyl, Silyl, Boryl, Phosphino, Amino, Thio, Seleno und Kombinationen davon umfassen kann Halogen, insbesondere Fluor bedeuten. Durch Veränderung der Kombination von Kationen und Anionen ist es möglich, die ionische Flüssigkeit mit den gewünschten Lösungseigenschaften für ein spezifisches thermoplastisches Polymer einzustellen.

Das Kation kann beispielsweise einen einzigen fünfgliedrigen Ring aufweisen, der nicht an andere Ringstrukturen gebunden ist. Ein Beispiel hierfür ist ein Imidazoliumkation. In diesem Fall kann das Anion der ionischen Flüssigkeit ein Halogen oder Pseudohalogen sein. Für eine weitere Beschreibung kann auf US-A-2005 0288 484, Absätze [0055] bis [0062] verwiesen werden.

Raumtemperatur-ionische Flüssigkeiten, die erfindungsgemäß eingesetzt werden können, sind beispielsweise in der WO 02/079269 auf den Seiten 13 bis 16 beschrieben. Dort werden als Kationen beispielsweise große, asymmetrische organische Kationen wie N-Alkylpyridinium, Alkylammonium, Alkylphosphonium und N, N'-Dialkylimidazolium angegeben. Bevorzugt weisen die ionischen Flüssigkeiten eine hohe Stabilität auf und haben besonders bevorzugt eine Zersetzungstemperatur oberhalb von 400 °C. Beispielsweise haben Dialkylimidazolium und Alkylpyridinium derartig hohe Zersetzungstemperaturen. Besonders bevorzugt können dabei 1-Alkyl-3-methyl-imidazoliumsalze eingesetzt werden, wobei beispielsweise PF₆⁻ ein geeignetes Gegenion ist.

Weitere geeignete ionische Flüssigkeiten sind in der prioritätsälteren, nicht vorveröffentlichten PCT/EP2007/060881 beschrieben.

Für weitere Beschreibungen von ionischen Flüssigkeiten kann auf Angew. Chem. 2000, 112, 3926 bis 3945, K. N. Marsh et al., Fluid Phase Equilibria 219 (2004), 93 bis 98 und J. G. Huddleston et al., Green Chemistry 2001, 3, 156 bis 164 wie auch DE-A-102 02 838, WO 2005/019137, WO 2005/007657, WO 03/029329, WO 2004/084627, WO 2005/017001 und WO 2005/017252 verwiesen werden. Beispielsweise sind in der WO 2005/007657 Salze von 1,5-Diazabicyclo[4.3.0]non-5-en (DBN) und 1,4-Diazabicylco[5.4.0]undec-7-en (DBU) beschrieben. In der WO 2004/084627 sind beispielsweise als Kationen cyclische Aminbasen wie Pyridinium, Pyridazinium, Pyrimidinium, Pyrazinium, Imidazolium, Pyrazolium, Oxazolium, 1,2,3- und 1,2,4-Triazolium, Thiazolium, Piperidinium, Pyrrolidinium, Quinolinium und Isoquinolinium beschrieben. Geeignete Gegenionen für 1,8-Diazabicylo[5.4.0]undec-7-enium (DBU) sind beispielsweise Chlorid, Methansulfonat, Formiat, Acetat, Tosylat, Trifluoroacetat, Saccharinat, Hydrogensulfat, Lactathiocyanat, und Trifluormethansulfamat. Das DBU-Ion kann beispielsweise durch C₁₋₁₂-Alkylreste, insbesondere C₄₋₈-Alkylreste substituiert sein. Beispielsweise kann 8-Butyl-DBU oder 8-Octyl-DBU als Kation eingesetzt werden. Weitere geeignete ionische Flüssigkeiten sind in WO 2008/006422, EP-A-2 223 904, WO 2009/101032, WO 2006/048171, JP-A-2009-155436 und JP-A-2005-220316 beschrieben.

Besonders bevorzugt werden erfindungsgemäß in der ionischen Flüssigkeit als Kation gegebenenfalls substituierte Imidazoliumkationen, gegebenenfalls substituierte 1,8-Diazabicyclo[5.4.0]undec-7-eniumkationen oder Gemische davon eingesetzt. Als Substituenten kommen insbesondere Alkylsubstituenten in Frage, beispielsweise C₁₋₁₀-Alkylsubstituenten. Für Imidazoliumionen kommen bevorzugt C₁₋₄-Alkylsubstituenten, insbesondere Ethyl- und Methylsubstituenten in Frage. Besonders bevorzugt wird in diesem Fall Ethylmethylimidazolium (EMIM), Methylmethylimidazolium (MMIM) als Kation eingesetzt. Ferner kann bevorzugt Butylmethylimidazolium (BMIM) als Kation eingesetzt werden. Bei 1,8-Diazabicyclo[5.4.0]undec-7-eniumkationen werden bevorzugt C₃₋₁₀-Alkylsubstituenten, insbesondere C₄₋₈-Alkylsubstituenten eingesetzt. Besonders bevorzugt sind hierbei 8-Butyl-DBU und 8-Octyl-DBU sowie Gemische davon.

Als Anionen für die Imidazoliumsalze können die vorstehend beschriebenen Anionen eingesetzt werden. Bevorzugte Gegenionen sind vorzugsweise ausgewählt aus Halogenid, gegebenenfalls substituiertem C₁₋₄-Carboxylat, Phosphat, C₁₋₄-Alkylphosphat, Di-C₁₋₄-Alkylphosphat, C₁₋₄-Alkylsulfonat, Hydrogensulfat, C₁₋₄-Alkylsulfat, Triflimid, Tetrafluoroborat, Triflat oder Gemischen davon.

Besonders bevorzugt ist die ionische Flüssigkeit Ethylmethylimidazoliumethylsulfat, -triflimid, -tetrafluoroborat, -triflat, -diethylphosphat oder ein Gemisch davon.

Die ionische Flüssigkeit kann auch Wasser in geringeren Anteilen enthalten. Beispielsweise kann der Wassergehalt in der ionischen Flüssigkeit 0 bis 5 Gew.-% betragen. Vorzugsweise ist der Wassergehalt so gering wie möglich.

Die erfindungsgemäße thermoplastische Formmasse kann neben den Komponenten A, B und C auch zusätzlich ein Metallsalz gemischt mit oder gelöst in Komponente C enthalten. Dabei ist das Metallsalz vorzugsweise ein in der ionischen Flüssigkeit lösliches Metallsalz. Durch den Zusatz der Metallsalze kann die Leitfähigkeit nochmal erhöht werden. Geeignete Metallsalze sind beispielsweise in EP-A-2 223 904 beschrieben. Vorzugsweise ist das Metallsalz ausgesucht aus der Gruppe der Alkalimetallsalze der Anionen bis(perfluoralkylsulfonyl)amid oder Bis(perfluoralkylsulfonyl)imid, Bis(trifluormethylsulfonyl)imid, Alkyl- und Aryltorsylaten, Perfluoralkyltorsylaten, Nitrat, Sulfat, Hydrogensulfat, Alkyl- und Arylsulfonaten, Polyethersulfaten und Polyethersulfonaten, Perfluoralkylsulfaten, Sulfonaten, Alkyl- und Arylsulfonaten, perfluorierten Alkyl- und Arylsulfonaten, Alkyl- und Arylcarboxylaten, Perfluoroalkylcarboxylaten, Perchlorat, Tetrachloraluminat, Saccharinat, Thiocyanat, Isothiocyanat, Dicyanamid, Tetraphenylborat, Tetrakis(pentafluorphenyl)borat, Tetrafluorborat, Hexafluorphosphat, Phosphat und/oder Polyetherphosphat.

Der Anteil an Metallsalz ist in der vorstehenden Mengenangabe für Komponente C nicht enthalten.

Bei Mitverwendung eines derartigen Metallsalzes beträgt sein Anteil, bezogen auf die Komponente C, je nach Löslichkeit, vorzugsweise 0 bis 30 Gew.-%.

Für eine Kombination von Metallsalzen mit ionischen Flüssigkeiten kann auf die WO 2008/006422, insbesondere Seite 4, Zeilen 6 bis 11, und Seite 16, verwiesen werden.

### Polymer Komponente A

Als Komponente A werden in den erfindungsgemäßen thermoplastischen Formmassen mindestens ein Polyamid, Copolyamid oder ein Polyamid enthaltender Polymerblend eingesetzt.

Die erfindungsgemäß eingesetzten Polyamide werden durch Umsetzung von Ausgangsmonomeren hergestellt, die beispielsweise ausgewählt sind aus Dicarbonsäuren und Diaminen oder Salzen aus den Dicarbonsäuren und Diaminen, aus Aminocarbonsäuren, Aminonitrilen, Lactamen und Gemischen davon. Es kann sich dabei um Ausgangsmonomere von beliebigen Polyamiden handeln, beispielsweise von aliphatischen, teilaromatischen oder aromatischen Polyamiden. Die Polyamide können amorph, kristallin oder teilkristallin sein. Die Polyamide können ferner beliebige geeignete Viskositäten bzw. Molekulargewichte aufweisen. Besonders geeignet sind Polyamide mit aliphatischem, teilkristallinem oder teilaromatischem, sowie amorphem Aufbau jeglicher Art.

Solche Polyamide weisen im allgemeinen eine Viskositätszahl von 90 bis 350, vorzugsweise 110 bis 240 ml/g auf, bestimmt in einer 0,5 gew.%-igen Lösung in 96 gew.-%-iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 11 Ringgliedern ableiten, wie Polycaprolactam und Polycapryllactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 2 bis 12, insbesondere 6 bis 8 Kohlenstoffatomen sowie m-Xylylendiamin, Di-(a-aminophenyl)methan, Di- (4-aminocyclohexyl)-methan, 2,2-Di-(aminophenyl)-propan oder 2,2-Di-(4-aminocyclohexyl)-propan sowie p-Phenylendiamin.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten. PA 6, PA 66 und Copolyamide 6/66 sind besonders bevorzugt.

Außerdem seien auch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129 195 und 129 196 beschriebenen Verfahren erfolgen. Für teilaromatische Polyamide kann ferner auf WO 2008/074687 verwiesen werden.

Die nachfolgende nicht abschließende Aufstellung enthält die genannten, so wie weitere Polyamide im Sinne der Erfindung (in Klammern sind die Monomeren angegeben):
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
PA 4 (Pyrrolidon)
PA 6 (ε-Caprolactam)
PA 7 (Ethanolactam)
PA 8 (Capryllactam)
PA 9 (9-Aminononansäure)
PA11 (11-Aminoundecansäure)
PA12 (Laurinlactam)
Polyphenylendiaminterephthalamid (p-Phenylendiamin, Terephthalsäure)

Diese Polyamide und ihre Herstellung sind bekannt. Einzelheiten zu ihrer Herstellung findet der Fachmann in Ullmanns Enzyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Besonders bevorzugt werden Polyamid-6, Polyamid-66 oder MXD6-Polyamid (Adipinsäure/m-Xylylendiamin) eingesetzt.

Zudem ist es erfindungsgemäß möglich, funktionalisierende Verbindungen in den Polyamiden vorzusehen, die zur Anbindung an Carboxyl- oder Aminogruppen befähigt sind und die z. B. mindestens eine Carboxyl-, Hydroxyl- oder Aminogruppe aufweisen. Dabei handelt es sich vorzugsweise um
verzweigend wirkende Monomere, die z. B. mindestens drei Carboxyl- oder Aminogruppen aufweisen,
Monomere, die zur Anbindung an Carboxyl- oder Aminogruppen befähigt sind, z. B. durch Epoxy-, Hydroxy-, Isocyanato-, Amino- und/oder Carboxylgruppen, und funktionelle Gruppen aufweisen, ausgewählt aus Hydroxyl-, Ether-, Ester-, Amid-, Imin-, Imid-, Halogen-, Cyano- und Nitrogruppen, C-C-Doppel- oder -Dreifachbindungen,
oder um Polymerblöcke, die zur Anbindung an Carboxyl- oder Aminogruppen befähigt sind, beispielsweise um Poly-p-aramidoligomere.

Durch den Einsatz der funktionalisierenden Verbindungen kann das Eigenschaftsspektrum der hergestellten Polyamide in weiten Bereichen frei eingestellt werden.

Beispielsweise können Triacetondiamin-Verbindungen als funktionalisierende Monomere eingesetzt werden. Es handelt sich dabei vorzugsweise um 4-Amino-2,2,6,6-tetramethylpiperidin oder 4-Amino-1-alkyl-2,2,6,6-tetramethylpiperidin, in denen die Alkylgruppe 1 bis 18 C-Atome aufweist oder durch eine Benzylgruppe ersetzt ist. Die Triacetondiamin-Verbindung ist in einer Menge von vorzugsweise 0,03 bis 0,8 mol-%, besonders bevorzugt 0,06 bis 0,4 mol-%, jeweils bezogen auf 1 Mol Säureamid-Gruppen des Polyamids, vorhanden. Für eine weitere Beschreibung kann auf die DE-A-44 13 177 verwiesen werden.

Als weitere funktionalisierende Monomere können auch die üblicherweise als Regler eingesetzten Verbindungen wie Monocarbonsäuren und Dicarbonsäuren verwendet werden. Für eine Beschreibung kann ebenfalls auf die DE-A-44 13 177 verwiesen werden.

Komponente A kann neben einem oder mehreren Polyamiden oder Copolyamiden auch mindestens ein weiteres Blendpolymer enthalten. Dabei beträgt der Anteil des Blendpolymers an Komponente A vorzugsweise 0 bis 60 Gew.-%, besonders bevorzugt 0 bis 50 Gew.-%, insbesondere 0 bis 40 Gew.-%. Beim Vorliegen des Blendpolymers beträgt seine Mindestmenge vorzugsweise 5 Gew.-%, besonders bevorzugt mindestens 10 Gew.-%.

Als Blendpolymer können beispielsweise natürliche oder synthetische Kautschuke, Acrylat-Kautschuke, Polyester, Polyolefine, Polyurethane oder Gemische davon eingesetzt werden, gegebenenfalls in Kombination mit einem Verträglichkeitsvermittler.

Als einsetzbare synthetische Kautschuke können Ethylen-Propylen-Dien-Kautschuk (EPDM), Styren-Butadien-Kautschuk (SBR), Butadien-Kautschuk (BR), NitrilKautschuk (NBR), Hydrin-Kautschuk (ECO), Acrylat-Kautschuke (ASA) genannt werden. Auch Silikon-Kautschuke, Polyoxyalkylen-Kautschuke und andere Kautschuke sind einsetzbar.

Als thermoplastische Elastomere können thermoplastisches Polyurethan (TPU), StyrolButadien-Styrol-Blockcopolymere (SBS), Styrol-Isopren-Styrol-Blockcopolymere (SIS), Styrol-Ethylen-Butylen-Styrol-Blockcopolymere (SEBS) oder Styrol-Ethylen-Propylen-Styrol-Blockcopolymere (SEPS) benannt werden.

Ferner können Harze als Blendpolymere eingesetzt werden, etwa Urethanharze, Acrylharze, Fluorharze, Silikonharze, Imidharze, Amidimidharze, Epoxyharze, Ureaharze, Alkydharze oder Melaminharz.

Als Blendpolymer kommen ferner Ethylencopolymerisate in Betracht, beispielsweise Copolymere aus Ethylen und 1-Octen, 1-Buten oder Propylen, wie sie in der WO 2008/074687 beschrieben sind. Die Molekulargewichte derartiger Ethylen-α-Olefin-Copolymere liegt vorzugsweise im Bereich von 10.000 bis 500.000 g/mol, bevorzugt zwischen 15.000 und 400.000 g/mol (Zahlenmittel des Molekulargewichts). Es können auch reine Polyolefine wie Polyethylen oder Polypropylen eingesetzt werden. Für geeignete Polyurethane kann auf EP-B-1 984 438, DE-A-10 2006 045 869 und EP-A-2 223 904 verwiesen werden.

Weitere geeignete thermoplastische Harze sind in der JP-A-2009-155436 in Absatz [0028] aufgeführt.

### Komponente B

Als Komponente B kommen (Leitfähigkeits)ruß, Graphit oder Gemische davon zum Einsatz. Geeignete Ruße und Graphite sind dem Fachmann bekannt.

Der Ruß ist insbesondere ein Leitruß oder Leitfähigkeitsruß. Als Leitruß kann jede gängige Form von Ruß eingesetzt werden, geeignet ist beispielsweise das Handelsprodukt Ketjenblack 300 der Firma Akzo.

Zur Leitfähigkeitsmodifizierung kann auch Leitruß eingesetzt werden. Bedingt durch graphitartige Schichten, die in amorphem Kohlenstoff eingebettet sind, leitet Russ Elektronen (F. Camona, Ann. Chim. Fr. 13, 395 (1988)). Die Stromleitung erfolgt innerhalb der Aggregate aus Rußpartikeln und zwischen den Aggregaten, wenn die Abstände zwischen den Aggregaten klein genug sind. Um Leitfähigkeit bei möglichst geringer Dosierung zu erzielen, werden vorzugsweise Russe mit anisotroper Struktur verwendet (G. Wehner, Advances in Plastics Technology, APT 2005, Paper 11, Katowice 2005). Bei solchen Russen lagern sich die Primärpartikel zu anisotropen Strukturen zusammen, so dass die zum Erreichen der Leitfähigkeit nötigen Abstände der Rußpartikel in Compounds schon bei vergleichsweise geringer Beladung erreicht werden (C. Van Bellingen, N. Probst, E. Grivei, Advances in Plastics Technology, APT 2005, Paper 13, Katowice 2005).

Geeignete Rußtypen weisen beispielsweise eine ÖI-Absorption (gemessen nach ASTM D 2414-01) von mindestens 60 ml/100g, bevorzugt mehr als 90 ml/100 g auf. Die BET-Oberfläche geeigneter Produkte beträgt mehr als 50, bevorzugt mehr als 60 m²g (gemessen nach ASTM D 3037-89). Auf der Rußoberfläche können sich verschiedene funktionelle Gruppen befinden. Die Herstellung der Leitrusse kann nach verschiedenen Verfahren erfolgen (G. Wehner, Advances in Plastics Technology, APT 2005, Paper 11, Katowice 2005).

Weiterhin kann auch Graphit als Leitfähigkeitsadditiv verwendet werden. Unter Graphit versteht man eine Modifikation des Kohlenstoffs wie sie beispielsweise in A. F. Hollemann, E. Wieberg, N. Wieberg, "Lehrbuch der anorganischen Chemie", 91.-100. Aufl., S 701-702 beschrieben ist. Graphit besteht aus planaren Kohlenstoffschichten, die übereinander angeordnet sind. Graphit kann durch Mahlen zerkleinert werden. Die Partikelgröße liegt im Bereich von 0,01 µm bis 1 mm, bevorzugt im Bereich 1 bis 250 µm.

Ruß (Carbon Black) und Graphit sind beispielsweise beschrieben in Donnet, J. B. et al., Carbon Black Science and Technology, Second Edition, Marcel Dekker, Inc., New York 1993. Es kann auch Leitfähigkeitsruß eingesetzt werden, der auf hochgeordnetem Ruß basiert. Dieser ist beispielsweise beschrieben in DE-A-102 43 592, insbesondere [0028] bis [0030], in EP-A-2 049 597, insbesondere Seite 17, Zeilen 1 bis 23, in DE-A-102 59 498, insbesondere in Absätzen [0136] bis [0140], sowie in EP-A-1 999 201, insbesondere Seite 3, Zeilen 10 bis 17.

Die erfindungsgemäßen thermoplastischen Formmassen können ferner weitere Zusatzstoffe wie weitere Füllstoffe, z. B. Glasfasern, Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten. Typischerweise liegen diese weiteren Zusatzstoffe in Mengen von 0 bis 50 Gew.-%, vorzugsweise 0 bis 35 Gew.-% vor. Für eine nähere Beschreibung möglicher Zusatzstoffe kann auf die WO 2008/074687, Seiten 31 bis 37 verwiesen werden.

Die Herstellung der erfindungsgemäßen thermoplastischen Formmassen erfolgt durch Extrusionsverfahren bei einer Temperatur vorzugsweise im Bereich von 170 bis 350 °C, besonders bevorzugt 200 bis 300 °C.

Es kann beispielsweise ein wie in DE-A-10 2007 029 008 beschriebenes Verfahren zum Einsatz kommen. Ferner kann für die Herstellung auf WO 2009/000408 verwiesen werden.

Die Herstellung erfolgt vorzugsweise in einem gleichläufigen Doppelschneckenextruder, in dem die Komponenten B und C in Komponente A eingebracht werden.

Die Komponente B kann als Pulver oder in Form eines Masterbatch in thermoplastische Formmasse eingebracht werden. Die Zuführung der ionischen Flüssigkeit der Komponente C kann unabhängig von der Zuführung des leitfähigen Füllstoffs der Komponente B erfolgen, beispielsweise im "hot feed" des Extruders. Alternativ kann ein Komponente C enthaltender Masterbatch eingesetzt werden.

Die Weiterverarbeitung der thermoplastischen Formmasse kann nach bekannten Verfahren erfolgen, beispielsweise durch Spritzgießen oder Formpressen.

Das erfindungsgemäße Verfahren erlaubt die Herstellung von mit den Kohlenstoff-Füllstoffen der Komponente B gefüllten thermoplastischen Formmassen mit geringem Energieaufwand bei guten Dispersionsgraden.

Durch die erfindungsgemäße Herstellung werden die thermoplastischen Formmassen bzw. daraus hergestellte Formkörper antistatisch oder leitfähig. Unter "antistatisch" werden Volumenwiderstände von 10⁹ bis 10⁶ Ohm cm verstanden. Unter "leitfähig" werden Volumenwiderstände von weniger als 10⁶ Ohm cm verstanden.

Ohne an diese Theorie gebunden zu sein, können leitfähige thermoplastische Formmassen insbesondere dann erhalten werden, wenn die Konzentration der Komponente B in der Nähe der Perkolationskonzentration liegt. Bei dieser Konzentration wird vorzugsweise ein Netzwerk aus Rußteilchen (oder Graphit) innerhalb der Polymermatrix ausgebildet. Dies bedeutet, dass die einzelnen Ruß- oder Graphitteilchen in der Polymermatrix miteinander in Kontakt stehen, so dass sie einen kontinuierlichen Pfad durch das Material bilden. Aufgrund des Zusatzes von ionischer Flüssigkeit kann die Leitfähigkeit dabei nochmals signifikant erhöht werden.

Die erfindungsgemäßen thermoplastischen Formmassen werden insbesondere zur Herstellung von leitfähigen Formkörpern eingesetzt.

Die Erfindung betrifft auch Formkörper aus der vorstehend beschriebenen thermoplastischen Formmasse.

Die Erfindung wird durch die nachstehenden Beispiele näher erläutert.

### Beispiele:

Zur Herstellung der thermoplastischen Formmasse wurden folgende Einsatzstoffe verwendet:

### Thermoplastische Matrix:

A1: Polyamid-6 mit einer Viskositätszahl (VN) von 150 ml/g
A2: Polyethylen (LDPE) mit einer MFR von 0,75 g/10 min

### Leitfähiger Füllstoff:

B: Leitruß Printex XE2B von Evonik

### Ionische Flüssigkeiten:

Die eingesetzten ionischen Flüssigkeiten waren:
C1: 1-Ethyl-3-Methyl-Imidazoliumtriflimid (CAS-Nr. 174899-82-2)
C2: 1-Ethyl-3-Methyl-Imidazoliumethylsulfat (CAS-Nr. 342573-75-5)
C3: 1-Ethyl-3-Methyl-Imidazoliumtetrafluorborat (CAS-Nr. 143314-16-3)
C4: 1-Ethyl-3-Methyl-Imidazoliumtriflat (CAS-Nr. 145022-44-2)

### Charakterisierungsmethoden:

Die Viskositätszahl des Polyamids VN wurde nach ISO 307 in einer 0,5 gew.%-igen Lösung in 96 gew.-%-iger Schwefelsäure bei 25 °C bestimmt.

Die MFR von Polyethylen wurde nach ISO 1133 bei 190 °C unter einer Last von 2,16 kg bestimmt.

Die elektrische Leitfähigkeit wurde als Volumenleitfähigkeit unter Verwendung einer 4-Punktmessapparatur durchgeführt. Für jede Platte wurde die Messung an fünf Proben der Dimensionen 77 x 12 x 4 mm³ durchgeführt, die aus gehärteten Platten ausgesägt wurden. Um einen guten Kontakt zwischen Probe und Elektroden zu erreichen, wurden vier Silberelektroden direkt auf die Probe gemalt unter Verwendung einer leitfähigen Silberpaste (Leitsilber 200 von Hans Wohlbring GmbH). Als Stromquelle wurde 225 Current Source, als Spannungsmessgerät 617 Programmable Electrometer und als Strommessgerät 1000 Multimeter, jeweils Keithley Instruments, eingesetzt.

Zur Herstellung der Formmassen wurden die Komponenten A1 und B zunächst trocken vermischt, dann mit Komponente C benetzt und die Mischung und zur

Compoundierung in einen Extruder DSM 15 eingeführt. Die Extrusion erfolgte bei einer Schmelztemperatur von 270 °C, einer Umdrehungsgeschwindigkeit von 80 U/min und einer Verweilzeit von 5 Minuten. Die Proben wurden dann als Platten mit den Maßen 30 x 30 x 1,27 mm³ für die Leitfähigkeitsmessung spritzgegossen. Die Herstellung der spritzgegossenen Platten erfolgte auf einer Xplor Formmaschine 12 mL bei einer Schmelztemperatur von 270 °C, einer Formtemperatur von 80 °C, einem Einspritzdruck von 12 bis 16 bar und einer Wiederholzeit von 15 Sekunden. Die Zusammensetzung der Formmassen und der ermittelte Volumenwiderstand sind in der nachfolgenden Tabelle 1 zusammengefasst.

**Tabelle 1**

| | | | | | | | Volumen-widerstand |
|---|---|---|---|---|---|---|---|
| | | Gew.-% | | Gew.-% | | Gew.-% | [Ohm*cm] |
| Ref. 1 | A1 | 96 | B | 4 | - | - | 7,20E + 11 |
| Ref. 2 | A1 | 95 | B | 5 | - | - | 9,01E + 11 |
| Ref. 3 | A1 | 94 | B | 6 | - | - | 7,83E + 10 |
| Ref. 4 | A1 | 100 | - | - | - | - | 8,81E + 13 |
| Ex. 4 | A1 | 95 | B | 4 | C2 | 1 | 6,36E + 10 |
| Ex. 5 | A1 | 94 | B | 5 | C2 | 1 | 8,92E + 05 |
| Ex. 6 | A1 | 93 | B | 6 | C2 | 1 | 1,41E+04 |

Referenzbeispiel 1 dient zum Vergleich mit Beispiel 4. Referenzbeispiel 2 dient zum Vergleich mit Beispiel 5. Referenzbeispiel 3 dient zum Vergleich mit Beispiel 6. In jedem der Fälle wurde durch Zusatz der ionischen Flüssigkeit der Volumenwiderstand stark abgesenkt.

Referenzbeispiel 4 gibt ein reines Polyamid wieder.

## Patentansprüche

1. Thermoplastische Formmasse, enthaltend, bezogen auf die thermoplastische Formmasse,
a) mindestens ein Polyamid, Copolyamid oder einen Polyamid enthaltenden Polymerblend als Komponente A,
b) 3 bis 20 Gew.-% Ruß, Graphit oder Gemische davon als Komponente B,
c) 0,1 bis 3 Gew.-% ionische Flüssigkeiten als Komponente C.

2. Thermoplastische Formmasse nach Anspruch 1, **dadurch gekennzeichnet, dass** Komponente B in der thermoplastischen Formmasse in einer Menge von 3,5 bis 10 Gew.-%, bezogen auf die thermoplastische Formmasse, enthalten ist.

3. Thermoplastische Formmasse nach Anspruch 1 oder 2, **dadurch gekennzeichnet, dass** Komponente C in der thermoplastischen Formmasse in einer Menge von 0,1 bis 1,5 Gew.-%, bezogen auf die thermoplastische Formmasse, enthalten ist.

4. Thermoplastische Formmasse nach einem der Ansprüche 1 bis 3, **dadurch gekennzeichnet, dass** die Polyamide in Komponente A ausgewählt sind aus der nachfolgenden Liste, wobei die Ausgangsmonomere in Klammern angegeben sind
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
PA 4 (Pyrrolidon)
PA 6 (ε-Caprolactam)
PA 7 (Ethanolactam)
PA 8 (Capryllactam)
PA 9 (9-Aminononansäure)
Poly(p-phenylendiaminterephthalamid) (Phenylendiamin, Terephthalsäure)
PA11 (11-Aminoundecansäure)
PA12 (Laurinlactam)
oder Gemischen oder Copolymeren davon.

5. Thermoplastische Formmasse nach einem der Ansprüche 1 bis 4, **dadurch gekennzeichnet, dass** Komponente A als Blendpolymer natürliche oder synthetische Kautschuke, Acrylat-Kautschuke, Polyester, Polyolefine, Polyurethane oder Gemische davon enthält, gegebenenfalls in Kombination mit einem Verträglichkeitsvermittler.

6. Thermoplastische Formmasse nach einem der Ansprüche 1 bis 5, **dadurch gekennzeichnet, dass** sie zusätzlich gemischt mit oder gelöst in Komponente C ein Metallsalz enthält.

7. Thermoplastische Formmasse nach einem der Ansprüche 1 bis 6, **dadurch gekennzeichnet, dass** in Komponente C das Kation der ionischen Flüssigkeit ausgewählt ist aus der Gruppe, enthaltend quaternäre Ammonium-Kationen, Phosphonium-Kationen, Imidazolium-Kationen H-Pyrazolium-Kationen, Pyridazinium-Ionen, Pyrimidinium-Ionen, Pyrazinium-Ionen, Pyrolidinium-Kationen, Guanidinium-Kationen, 5- bis mindestens 6-gliedrigen Kationen, die mindestens ein Phosphor- oder Schwefelatom enthalten, dem 1,8-Diazabicyclo[5.4.0]undec-7-enium-Kation und dem 1,8-Diazabicyclo[4.3.0]non-5-inium-Kation sowie Oligo- und Polymeren, die diese Kationen enthalten.

8. Thermoplastische Formmasse nach einem der Ansprüche 1 bis 7, **dadurch gekennzeichnet, dass dadurch gekennzeichnet, dass** in der ionischen Flüssigkeit das Anion ausgewählt ist aus Halogenid, gegebenenfalls substituiertem C₁₋₄-Carboxylat, Phosphat, C₁₋₄-Alkylphosphat, Di-C₁₋₄-alkylphosphat, C₁₋₄-Alkylsulfat, C₁₋₄-Alkylsulfonat, Hydrogensulfat, Triflimid, Tetrafluoroborat, Triflat oder Gemischen davon.

9. Verfahren zur Herstellung von thermoplastischen Formmassen nach einem der Ansprüche 1 bis 8, **dadurch gekennzeichnet, dass** die Komponenten B und C in Komponente A in einem gleichläufigen Doppelschneckenextruder eingebracht werden.

10. Verfahren nach Anspruch 9, **dadurch gekennzeichnet, dass** die Extrusion bei einer Temperatur im Bereich von 170 bis 350 °C durchgeführt wird.

11. Verwendung einer thermoplastischen Formmasse nach einem der Ansprüche 1 bis 8 zur Herstellung von leitfähigen Formkörpern.

12. Formkörper aus einer thermoplastischen Formmasse nach einem der Ansprüche 1 bis 8.
